# EUROPEAN PATENT APPLICATION

(11) **EP 1 582 314 A1**
(43) Date of publication of application: **05.10.2005**
(21) Application number: 05102400.8
(22) Date of filing: 24.03.2005
(51) Int. Cl.: B25J 15/04

(54) **Coupling device with radially movable locking members**

(30) Priority: 02.04.2004 SE 0400882
(71) Applicant: Truconex Engineering, 79596 Boda Kyrkby (SE)
(72) Inventor: Hansson, Olof, 795 96 Boda Kyrkby (SE)
(74) Representative: Holmberg, Nils Anders Patrik

(57) **Abstract**

The present invention relates to a coupling device for releasibly connecting a first part to a second part, wherein the first part comprises substantially radially movable locking members, an actuating means capable of moving the locking members, wherein the second part comprises receiving means capable of receiving the locking members, whereby, during bringing the parts together and activating the actuating means, the locking members are brought in the receiving means, enabling an axial locking of the two parts, and wherein the actuating means, the locking members and the receiving means are designed and arranged such that a rotational lock is obtained.

## Description

### TECHNICAL AREA

The present invention relates to a coupling device and in particular to a coupling device for detachably connecting a tool holder to a machine, in particular to a robot arm.

### BACKGROUND OF THE INVENTION

Robots have been used during a number of years in the industry for performing repetitive work tasks, such as welding, riveting, assembly of sub-parts and the like.

However for some work tasks there is a need to change tools at the end of the robot arm in order to increase the number of work tasks the robot may perform. Therefore detachable connection devices have been developed, which enables the robot to automatically change tools.

There are a number of requirements on a connection device for an industrial robot. Firstly, the connection needs to be able to support the weight of the tool both statically and dynamically. Secondly the tool has to be positively fixed regarding its position in relation to the arm and this position must not be changed during use or else the robot can not perform its tasks. Further the connection must be such that an automatic change of tools is possible.

Conventionally this has been solved with one type of tool changing system where one part is provided with a protruding hub in the form of a ring. The ring is provided with a number of radially through-going recesses in which steel balls are placed. Inside the ring a somewhat conical piston is axially movable and arranged such that it is able to come in contact with the balls and move them radially in the recesses.

The other part is arranged with a cylindrical recess with the substantially the same diameter as the hub. The recess is arranged with a circumferential groove in which the balls fit when they are pressed radially by the piston. This causes the two parts to be pressed and locked against each other. In order to ensure a proper indexing between the two parts and also to prevent any angular misalignment during use a number of locating pins are attached to one part and fit into bores in the other part.

There are a number of drawbacks with the mentioned device. One is that the balls only have point contact with the hub. This causes large contact forces which inevitably, during continual use, leads to permanent deformation of the hub, ie. indentations in the surface, which in turn leads to a decreased precision and a reduced locking force.

Further the known design necessitates a rotational lock between the two parts such as locating pins since the balls and the hub cannot provide this.

For many machines there are machine parts that are in contact with each other at the same time as they are moving in relation to each other and where a transfer of electricity in the form of signals or power needs to be performed. For example, it might be machine slides moving relative to guiding surfaces, rotating chucks in machine tools and robot swivels.

In order to be able to obtain a transfer of electricity between these machine parts, usually conductive paths are used, which are attached to one of the parts while the other part is provided with a number of contacts contacting the conductive paths. Conventionally coal or graphite contacts are used, which are dragged against the conductive paths. A classic example of this is alternating current motors in most hand-held machines having this configuration.

A substantial drawback with this design is that these types of contacts are worn relatively fast and which, during the wear, produce a coal dust. Further, different types of spring elements are present, which are pressed against the conductive paths. An example of spring elements is robot swivels arranged with cooper tongues that slide with a certain angle against the conductive paths. One problem with these is when they break, in whole or partly. When they break completely the contact is lost for natural reasons, and when the break partly the remaining part of the tongue risks tearing the conductive paths apart.

### BRIEF DESCRIPTION OF THE INVENTION

The aim of the present invention is to provide a coupling device of the above mentioned type that does not display the drawbacks of the state of the art.

This aim is solved with a device characterised by claim 1. Advantageous features of the present inventions are stated in the dependent claims.

According to a main aspect of the invention it is characterised by a coupling device for releasibly connecting a first part to a second part, wherein the first part comprises substantially radially movable locking members, an actuating means capable of moving the locking members, wherein the second part comprises receiving means capable of receiving the locking members, whereby, during bringing the parts together and activating the actuating means, the locking members are brought in the receiving means, enabling an axial locking of the two parts, and wherein the actuating means, the locking members and the receiving means are designed and arranged such that a rotational lock is obtained.

According to a further aspect of the invention it is characterised in that the locking members are spherical and that the receiving means are recesses arranged in an opening in the second part and preferably that the recesses are arranged with semi-spherical surfaces substantially corresponding to the spherical shape of the locking members.

According to yet an aspect of the invention, the locking members are arranged in radially extending bores in a ring, which ring has a shape substantially corresponding to the opening of the second part and that the actuating means comprises an axially movable piston arranged inside the ring having surfaces capable of moving the locking members radially when moved axially.

The actuating surfaces of the piston preferably comprise semi-spherical surfaces substantially corresponding to the surfaces of the locking members.

The advantage with the present invention is that locking members and the receiving means are able to provide both axial locking and rotational locking. There is thus no longer any need for a locating, or anti-rotation, pin in order to obtain a rotational lock.

Since the locking means are arranged as spheres and the receiving means are arranged with semi-spherical surfaces, a surface contact is obtained between these rather than a point contact, whereby the risk of plastic deformation is greatly reduced.

Further since the actuating means is also arranged with semi-spherical surfaces a surface contact is obtained also between the actuating means and the locking means.

In all a very strong and positive locking of the two parts together is obtained both axially and rotationally without any need for further locking means.

Further advantage with the device according to present invention is that due to that the conductive paths of the carriers are in contact with each other a very compact device is obtained, which requires much less space than conventional devices. Further, a large contact surface between the conductive paths is obtained, which provides for relatively large currents to be transferred without the risk for breakdown.

Because contacts of coal have been omitted, no dust or debris is produced which may disturb the function. The wear is further minimal in comparison, which prolongs the service intervals.

By using pressure means, an even and constant pressure between the conductive paths is ascertained. In order to further ascertain a good contact between the conductive paths and decrease the influence of parallax errors between the carriers, these may be provided with stiffening means and/or flexibility means.

For certain applications with high speed between the carriers and/or applications where a lot of movement takes place continuously, it might be preferable to arrange transfer means in the form of roll bodies. By this design a reduced friction is obtained between the conductive paths at the same time as the device by necessity becomes somewhat higher.

These and other aspects of, and advantages with, the present invention will become apparent from the following detailed description and the accompanying drawings.

### BRIEF DESCRIPTION OF THE DRAWINGS

In the following detailed description of the invention, reference will be made to the accompanying drawings, of which
Fig. 1 is a cross-sectional view of a complete swivel for a robot arm together with a coupling device according to the invention,
Fig. 2 is a cross-sectional view of the coupling device and parts of the swivel,
Fig. 3 is a detailed view of a lock ring comprised in the present invention,

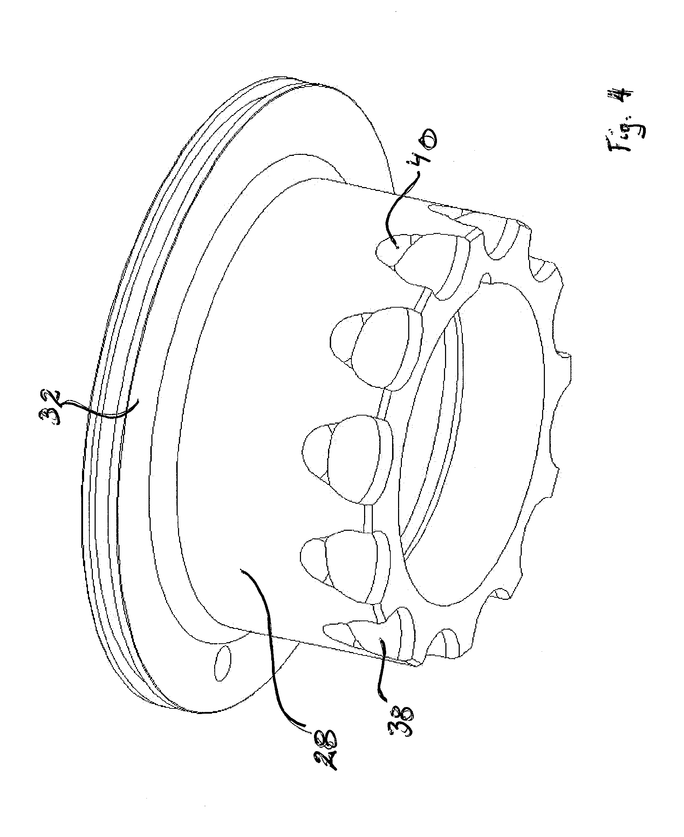

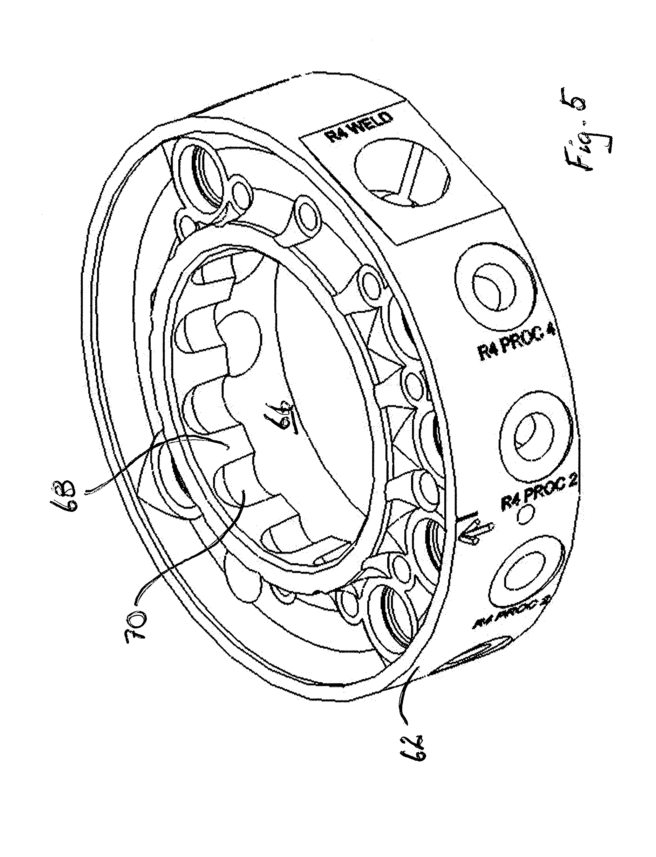

Fig. 4 is a detailed view of a lock ball carrying part comprised in the present invention,
Fig. 5 is a detailed view of a lock piston comprised in the present invention,
Fig. 6 is a cross-sectional view corresponding to Fig. 2 where the two parts of the coupling device have been brought almost together,
Fig. 7 is a cross-sectional view corresponding to Fig. 2 where the two parts of the coupling device have been locked together,
Fig. 8 shows a perspective view of an electricity transferring device comprised in the invention,
Fig. 9 shows the device according to Fig. 8 in a top view,
Fig. 10 shows the device according to Fig. 8 in a side view,
Fig. 11 shows the device according to Fig. 10 connected to a pressure means,
Fig. 12 shows a detailed view taken from Fig. 11, and
Fig. 13 shows a detailed view of an alternative embodiment of the electricity transferring device,

### DETAILED DESCRIPTION OF THE INVENTION

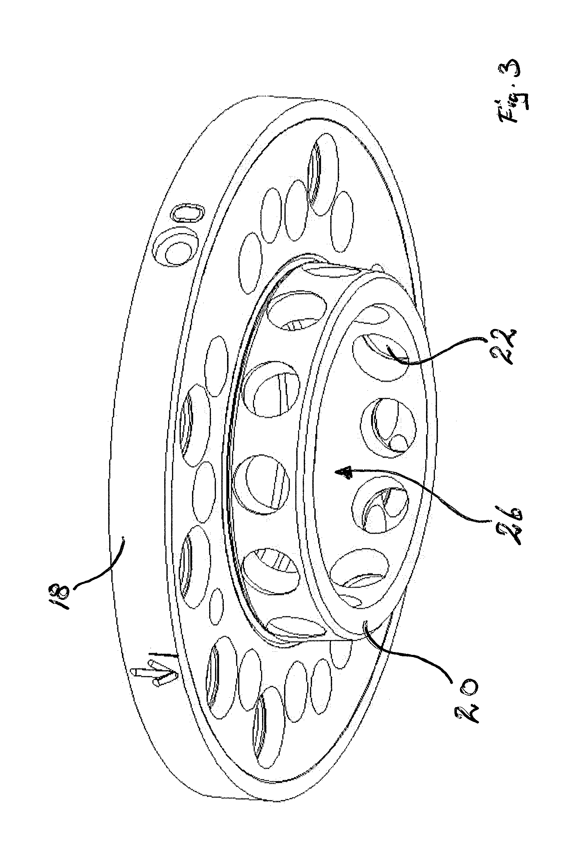

The coupling device according to the present invention shown in the drawings comprises a first part 10 intended to be attached to the end of a robot arm or the like. The first part is preferably a part of a swivel 12 enabling rotation of the coupling device and thus the tool and enabling the transfer of electricity and air between . The first part comprises a generally cylindrical housing 14 arranged with a number of through-going bores 16 in which fixating screws fit for bolting the first part to the robot arm. At the end of the housing a front plate 18 is also attached by the fixating screws. A ring 20, Fig. 3, is arranged at the centre of the front plate and a number of radial bores 22 are arranged in the ring. Each bore is arranged with a locking member, in this case a steel ball 24. The front plate is further arranged with a cylindrical through-going hole 26 coaxial with the ring.

In the cylindrical hole a an actuating means, a piston 28 is arranged axially slidable. A seal 30 is arranged between the piston and the cylindrical hole. The rear part of the piston 28 is arranged with an outwardly directed ledge 32 having a diameter substantially corresponding to a cylindrical recess 34 in the housing and arranged with a seal 36. The front end of the piston is arranged with a number of spherical recesses 38 along its outer circumference edge. The number and spacing of the recesses correspond to the number of balls and their positions in the ring. The radius of the recesses corresponds substantially to the radius of the balls. Partly spherical cut-outs 40 are also arranged in connection to the spherical recesses.

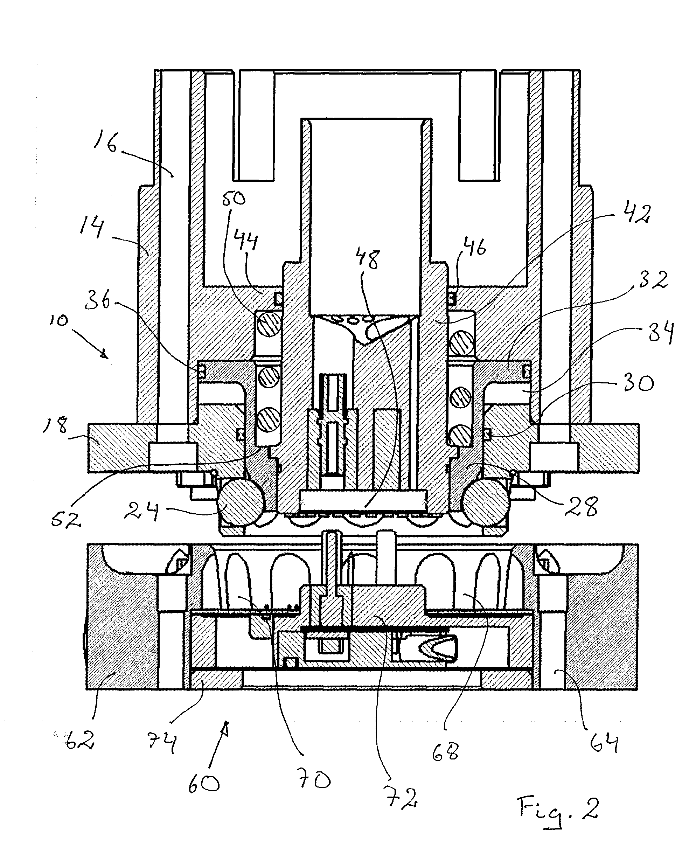

Inside the piston a generally cylindrical member 42 is attached, Fig. 2. It extends from the front part of the piston and into the housing and through an internal wall 44 in the housing. A seal 46 is arranged between the member and the internal wall. The front end of the member is arranged with contact means 48 for transferring electricity and other media to the second part. A spring 50 is further arranged between an inner ledge 52 of the piston/member assembly and the internal wall 44 of the housing.

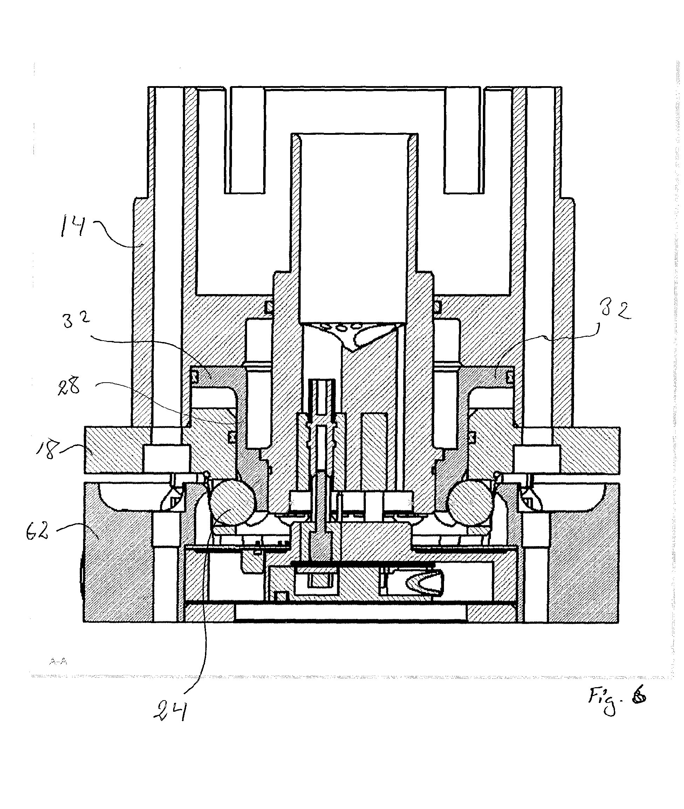

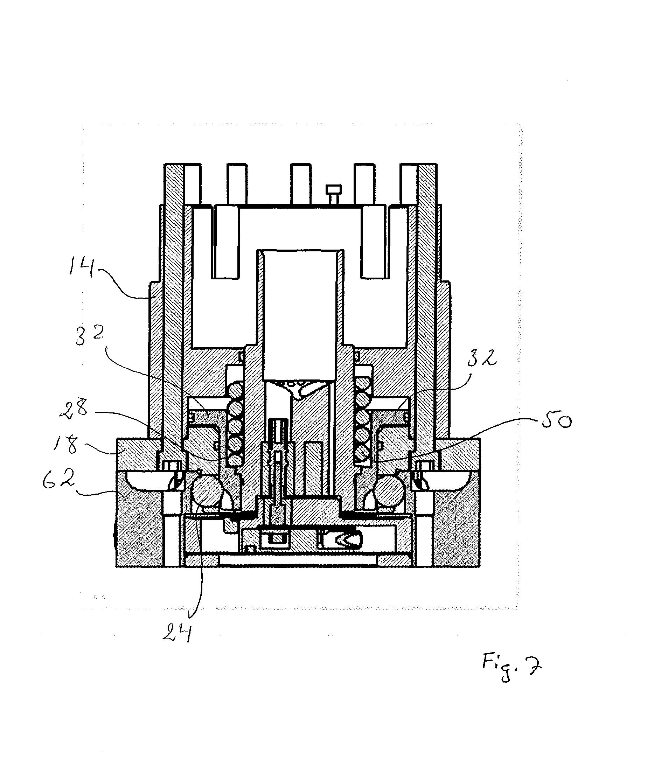

The second part 60 comprises a block-shaped part 62, Fig. 5, arranged with a number of through-going bores 64 in which bolts fit for bolting a tool to the second part. A central circular opening 66 is arranged in the second part having a side wall 68 that is somewhat conical, corresponding substantially to the conicity of the outer surface of the ring of the first part. In the side wall a number of receiving means, cut-outs 70, have been made, the number and spacing corresponding to the balls in the ring of the first part. The upper part of the cut-outs have a semi-spherical surface that transforms into a semi-cylindrical surface. Inside the central opening a contact means 72 is arranged comprising centrally arranged contact points having positions and spacing corresponding to the contact means of the first part. The contact means are held in place by a ring 74 press-fitted into the lower part of the central opening.

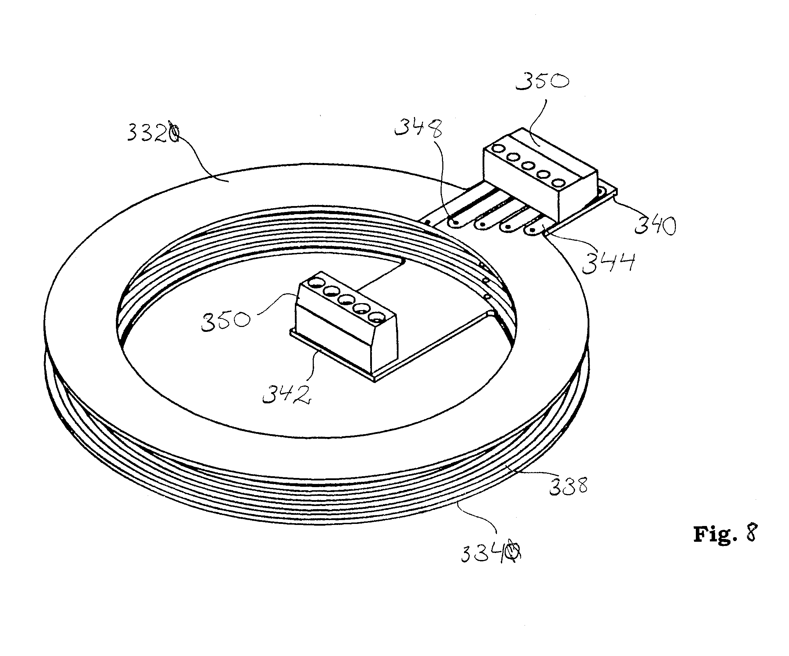

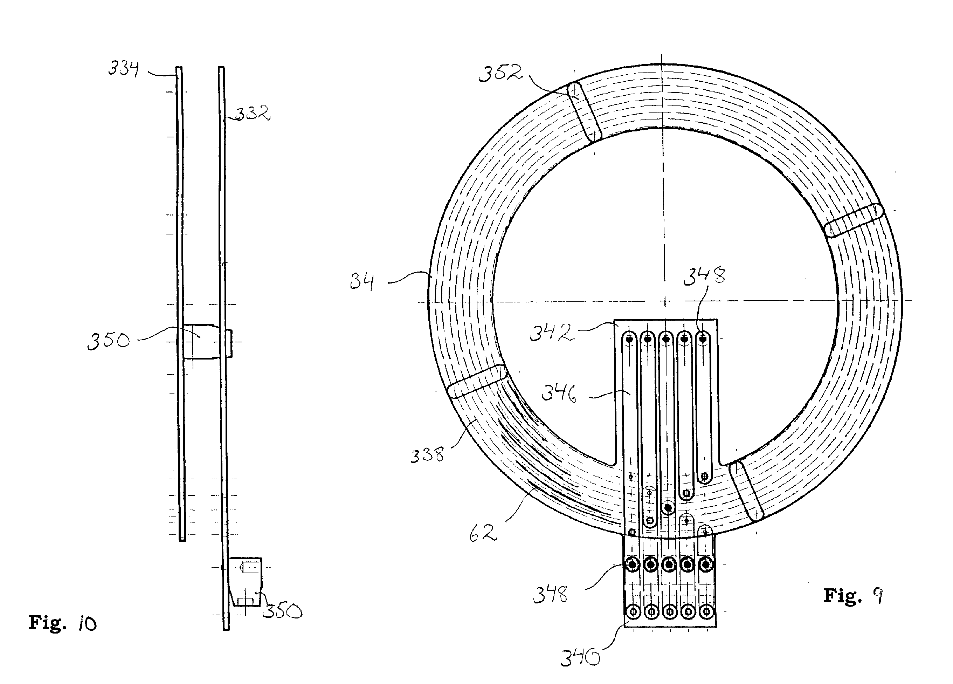

The device according to the invention is intended to function as follows. When the parts 10, 60 are to be connected to each other the piston 28 is drawn into the housing against the force of the spring by pressurised media, such as air, that is fed into the space 34 between the rear surface of the front plate 18 and the flange 32 of the piston via conduits (not shown). The balls 24 are then free to move inwards into the semi-spherical recesses in the piston. The end of the robot arm is positioned such that the first part can dock onto the second part where the contact means 48, 72 are in register with each other. The balls 24 of the first part is also in register with the recesses 70 in the second part. When the ring 20 of the first part enters the circular opening 66 of the second part 60, Fig. 6, the balls 24 are free to move within the radial bores and pass the edge of the opening 66. The contact means 48, 72 come in contact with each other and register that the parts are in position against each other. This triggers the removal of pressurised media from the space 34 and due to the force of the spring 50 and pressurised media entering a space between the upper surface of the flange 32 and internal wall 44 forces the piston 28 to move downwards, Fig. 7, together with the cylindrical member 42. The movement of the piston forces the balls to move radially outwards due to the semi-spherical recesses 38 in the piston and into the upper semi-spherical part of the recesses 70 of the second part. When the piston has reached its lowermost position the balls are placed in the semi-spherical cut-outs 40. The contact means are now fully together. The relation of the axial position of the cut-outs 40, the axial position of the radial bores and the axial position of the upper semi-spherical parts of the recesses 70 cause the balls to exert a locking force that presses the two parts very firmly against each other. The spring 50 further ensures that the parts are kept locked together even if the pressurised media will fail.

The two parts are thus positively locked against each other both in the axial direction and in the rotational direction due to the balls and their seats in the semi-spherical cut-outs and recesses of the first and the second part respectively. Due to the semi-spherical shape of these a contact area is obtained for the balls against the surfaces rather than a contact point.

In order to remove the parts from each other the sequence is reversed.

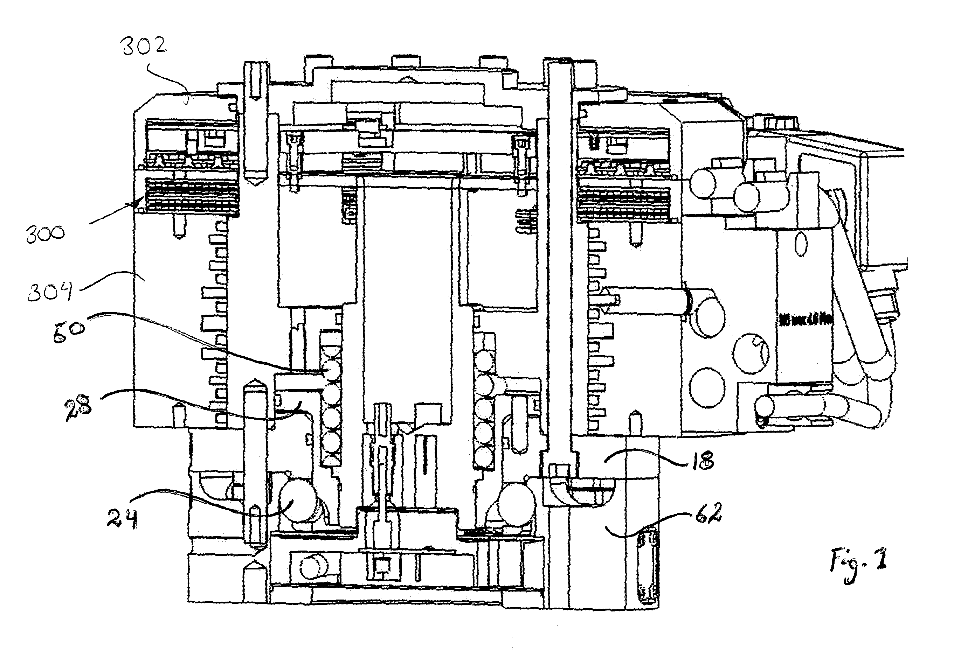

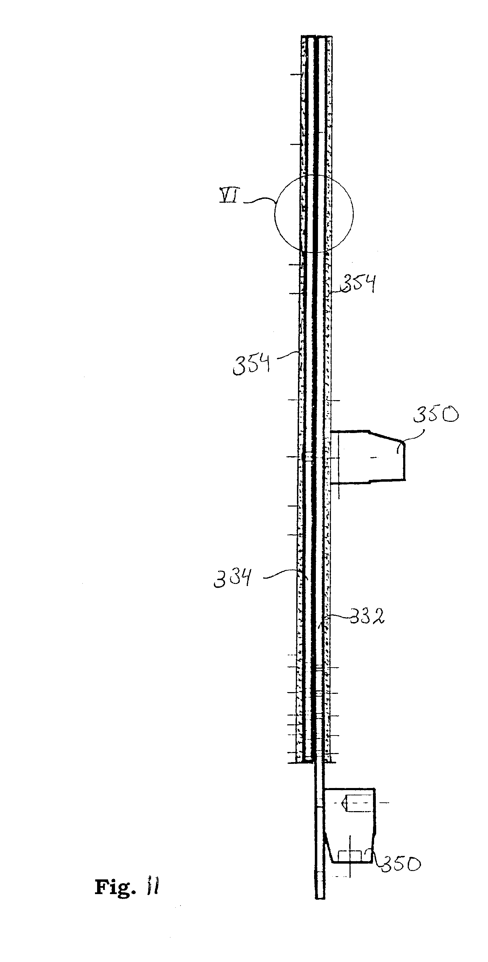

According to the embodiment shown in Fig. 1, the device according to the invention is further designed with a device 300 for transfer of electricity in connection to an attachment plate 302 for attachment to the arm of a robot (not shown). The electricity transferring device comprises two thin plates or carriers 332, 334, Figs. 8-13, of non-conductive material, which in the embodiment shown have the form of rings.

Each carrier is attached to a respective part of the device, which parts move in respect to each other. In this case one carrier is attached to the attachment plate 302 and/or inner part of the swivel, which inner part is attached to the attachment plate, while the other carrier is attached to a sleeve 304 surrounding the inner part, and which is rotatable around the inner part.

On each of the carrier's one side surface a number of conductive paths 336, 338 are arranged, by for example etching of a metal layer so that circular connections are obtained. Each carrier is further arranged with a tongue 340, 342 or the like, also these of a non-conductive material. Suitably the tongue is integrated with the carrier. Each tongue is arranged with conductive paths 344, 346, the number of which corresponds to the number of circular conductive paths.

The paths on the tongue are arranged on the opposite side of the carrier as the circular conductive paths. Electrically conductive passages 348 are arranged between the circular conductive paths and the conductive paths of the tongue. Further, each tongue may be arranged with a connection socket 350 attached to the conductive paths of the tongue.

Each carrier may be arranged with stiffening means 352 in the form of material thickenings stretching radially over the side surface of the carrier on the opposite side as the circular conductive paths.

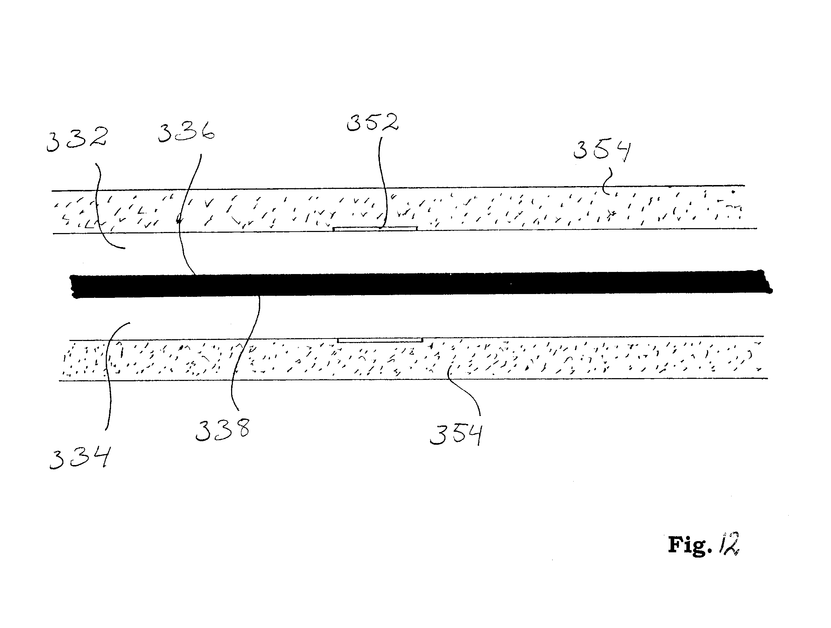

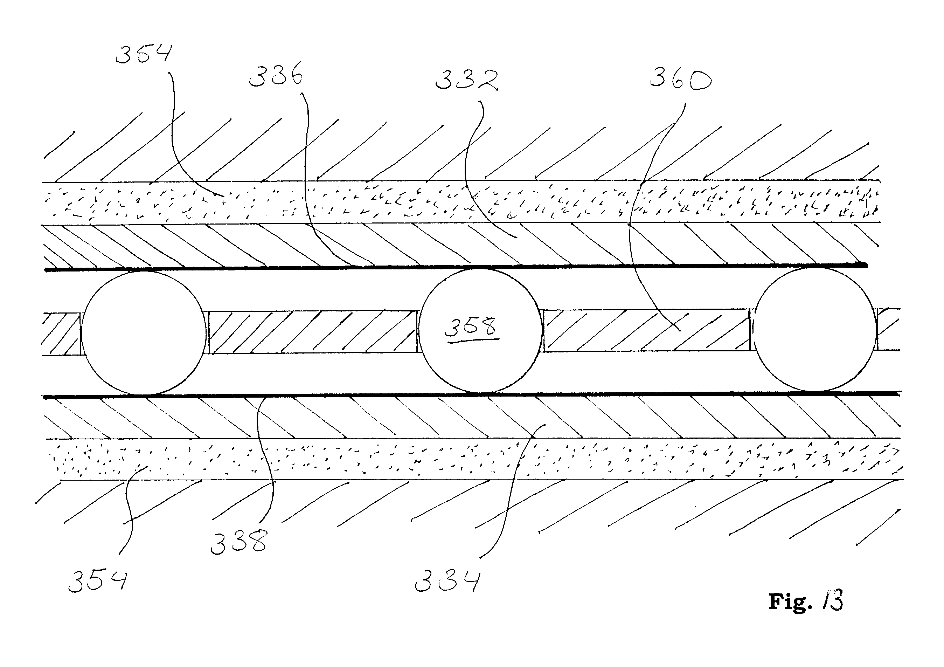

Each carrier could suitably be arranged with pressure means 354, Figs. 12 and 13, which are in contact with the surface opposite the conductive paths. The function of the pressure means is to press the carriers and their respective conductive paths against each other. The pressure means are in the embodiment shown made of an elastically resilient material providing an even pressure over the entire surface of the carrier. The stiffening means provides a local pressure increase, which ascertains that the contact is maintained during movement of the conductive paths. This also reduces the influence of parallax errors between the carriers.

For certain applications, for example during high speeds and a lot of movements between the conductive paths and/or if one wishes a very long life, the device may be arranged with essentially inflexible transfer means, 358, Fig. 13. In the embodiment shown, these comprise balls, which are in contact against the respective conductive path of the carriers. In order to keep the balls in the right position a holder 360 is arranged with perforations, the sizes of which essentially coincides with the diameters of the balls. It is to be understood that other rotating means, such as for example rollers, may be used instead of balls.

In certain cases it is conceivable to increase the flexibility of the carries in order to ascertain a good contact between the conductive paths. The carriers may in this case be arranged with slots 362, Fig. 9, between the contact pats in certain selected places.

The electricity transferring device shown in Figs. 8-13 consists of two carriers. It is however conceivable to have more than one pair of carriers in the electricity transferring device. This may be valuable if the application for example requires a large number of transfer channels, which, due the available space can not be fitted into one pair of carriers.

The conductive paths may be made of material alloys which, apart from good conductivity, also are resistant against wear, such as for example nickel plating.

It is to be understood that the present invention is not limited to the embodiment described above and shown in the drawings and that it may be modified within the scope of the patent claims.

## Claims

1. Coupling device for releasably connecting a first part to a second part, wherein the first part comprises substantially radially movable locking members, an actuating means capable of moving the locking members, wherein the second part comprises receiving means capable of receiving the locking members, whereby, during bringing the parts together and activating the actuating means, the locking members are brought in the receiving means, enabling an axial locking of the two parts, and wherein the actuating means, the locking members and the receiving means are designed and arranged such that a rotational lock is obtained.

2. Coupling device according to claim 1, wherein the locking members are spherical and that the receiving means are recesses arranged in an opening in the second part.

3. Coupling device according to claim 2, wherein the recesses are arranged with semi-spherical surfaces substantially corresponding to the spherical shape of the locking members.

4. Coupling device according to claims 2 or 3, wherein the locking members are arranged in radially extending bores in a ring, which ring has a shape substantially corresponding to the opening of the second part.

5. Coupling device according to claim 4, wherein the actuating means comprises an axially movable piston arranged inside the ring having surfaces capable of moving the locking members radially when moved axially.

6. Coupling device according to claim 5, wherein the actuating surfaces of the piston comprise semi-spherical surfaces substantially corresponding to the surfaces of the locking members.

7. Coupling device according to any of the preceding claims, **characterised in that** it further comprises a device for transfer of electricity between two details, in contact with each other and movable in relation to each other, comprising a number of essentially inflexible conductive paths (314) arranged on a carrier (310), which carrier is intended to be attached to one of the details, a number of essentially inflexible conductive paths (316) arranged on a second carrier (312), which carrier is intended to be attached to the second detail, whereby the conductive paths are in contact with each other and whereby the conductive paths stretch in the moving direction of the details.

8. Device according to claim 7, **characterised in that** pressure means (332) are arranged capable of pressing the carriers and the conductive paths against each other.

9. Device according to claim 8, **characterised in that** the pressure means comprises an elastically resilient material.

10. Device according to claim 8 or 9, **characterised in that** the pressure means is arranged for the respective carrier.

11. Device according to any of the preceding claims 7 to 10, **characterised in** essentially inflexible transfer means (340) arranged between the conductive paths of the two details.

12. Device according to claim 11, **characterised in that** the transfer means are formed as roll bodies.

13. Device according to claim 8, **characterised in that** stiffening members (330) are arranged on at least one of the carriers on opposite side as the conductive paths.
